# EUROPEAN PATENT SPECIFICATION

(11) **EP 0 499 413 B1**
(45) Date of publication and mention of the grant of the patent: **03.09.1997**
(21) Application number: 92301033.4
(22) Date of filing: 07.02.1992
(51) Int. Cl.: G11B 17/028, G11B 23/00

(54) **Disc and disc chucking device**
Platte und Plattenklemmvorrichtung
Disque et dispositif de blocage de disque

(30) Priority: 12.02.1991 JP 40965/91; 12.07.1991 JP 198857/91
(43) Date of publication of application: 19.08.1992
(73) Proprietor: SONY CORPORATION, Tokyo 141 (JP)
(72) Inventor: Mukawa, Hiroshi, c/o Patents Division, Shinagawa-ku, Tokyo 141 (JP)
(74) Representative: Purvis, William Michael Cameron

(56) References cited:
- DE-A- 2 643 464
- FR-A- 1 550 598
- JP-A-63 129 578
- US-A- 4 340 955
- PATENT ABSTRACTS OF JAPAN vol. 14, no. 219 (P-1045)(4162) 9 May 1990 & JP-A-02 049 261
- PATENT ABSTRACTS OF JAPAN vol. 13, no. 322 (P-902)(3670) 20 July 1990 & JP-A-01 088 951
- PATENT ABSTRACTS OF JAPAN vol. 12, no. 363 (P-764)(3210) 29 September 1988 & JP-A-63 113 858
- PATENT ABSTRACTS OF JAPAN vol. 015, no. 033 (P-1158)25 January 1991 & JP-A-02 273 365
- PATENT ABSTRACTS OF JAPAN vol.14, no. 219 (P-1045) 9 May 1990 & JP-A-02 050 347

## Description

The invention relates to a recording disc for information signals, such as an optical disc or a magneto-optical disc, and disc chucking apparatus for chucking such a recording disc in disc recording and/or reproducing apparatus.

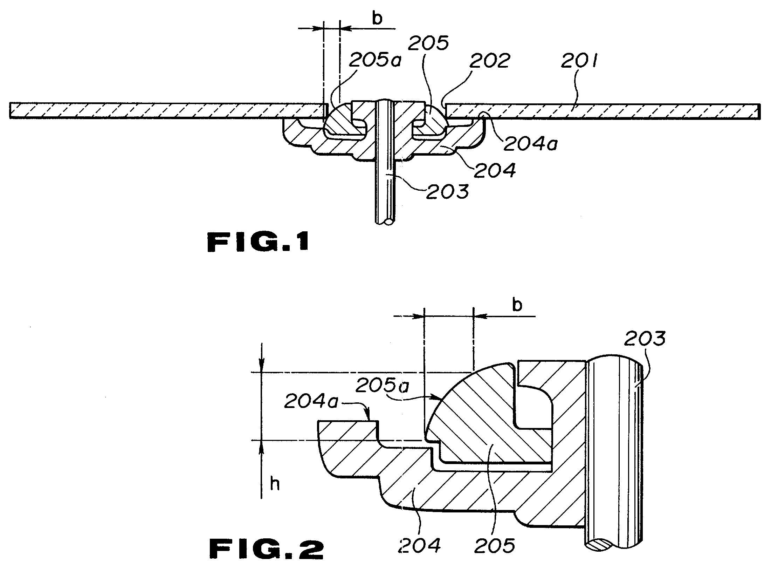

A recording disc for recording and/or reproducing information signals, such as an optical disc or a magneto-optical disc, has heretofore been proposed as shown in Figures 1 and 2 of the accompanying drawings. Referring to Figure 1, a recording disc includes a disc substrate 201, formed of a light-transmitting material such as polycarbonate resin, and a recording layer, such as a layer of a metal or a magnetic material, deposited on a major surface of the disc substrate 201. A light beam can be irradiated on the other major surface of the substrate, that is the major surface thereof opposite to the surface on which the recording layer is deposited to record or reproduce information signals on or from the recording layer.

The disc substrate 201 is formed with a centre hole 202 to permit the disc to be held by recording and/or reproducing apparatus which can record and/or reproduce information signals on or from the recording disc. The centre hole 202 is formed in the disc substrate 201 so that the centre of the centre hole 202 is in register with the centre of curvature of recording track(s) formed concentrically or spirally on the recording layer.

The recording disc is set on a disc table 204 in the recording and/or reproducing apparatus. The disc table 204 is in the form of a disc larger in diameter than the centre hole 202 and is mounted on the free end of a shaft 203 of a spindle motor, not shown. A setting portion 204a, on which the disc substrate 201 of the recording set is set, is formed on the upper peripheral surface of the disc table 204, that is on the major surface of the disc table 204 situated in the direction of projection of the distal end of the driving shaft 203.

A centring member 205 is reciprocably mounted at the centre of the disc table 204. The centring member 205 is in the form of a cone gradually tapered towards the free end of the rotating shaft 203 and has an outside diameter substantially corresponding to the diameter of the centre hole 202 in the disc. The centring member 205 is elastically biased in the direction of the free end of the rotating shaft 203 by a compression coil spring, not shown.

When it is loaded into recording and/or reproducing apparatus, the recording disc is set on the disc table 204 and is thrust, by a chucking unit, not shown, towards the disc table 204, so that the mid part of the major surface of the disc abuts against the setting portion 204a. That is, with the recording and/or reproducing apparatus, a so-called self alignment or centring operation is achieved by the inner periphery of the centre hole 202 sliding on the outer peripheral surface of the centring member 205.

The recording disc may be self-aligned in this manner even if it is initially offset with respect to the centring member 205 by a distance corresponding to the width of the outer peripheral surface 205a of the centre member 205 along the major surfaces of the disc substrate 201, as indicated by an arrow b in Figures 1 and 2, as disclosed for example in patent specification US-A-4,340,955.

If, in the recording and/or reproducing apparatus, the recording disc is to be held more reliably and satisfactorily, the self-alignment or centring operation needs to be achieved even if the amount of offset of the recording disc with respect to the centring member 205 is large when the recording disc is set on the disc table 204. To this end, the width of the outer peripheral surface 205a of the centring member 205 along the major surface of the disc substrate 201 needs to be increased.

However, if the width of the outer peripheral surface 205a of the centring member 205 along the major surface of the disc substrate 201 is increased in this manner, the slope of the outer peripheral surface 205a with respect to the major surfaces of the disc substrate 201 becomes more gentle, so that the inner peripheral surface of the centre hole 202 becomes more difficult to slide along the outer peripheral surface 205a. The result is that the amount of shifting of the disc for centring is insufficient so that a satisfactory self-alignment or centring is not achieved.

Thus, for achieving satisfactory self-alignment, it is necessary to increase the width of the outer peripheral surface 205a in a direction along the major surfaces of the disc substrate 201, while maintaining the slope of the surface 205a with respect to the major surfaces of the disc substrate 201. To this end, it is necessary to increase the height, shown by an arrow h in Figure 2, of the surface 205a in a direction normal to the major surfaces of the disc substrate 201.

If the height of the surface 205a in the direction normal to the major surfaces of the disc substrate 201 is increased, the centring member 205 will protrude beyond the major surface of the disc substrate 201 opposite to the disc table setting major surface via the disc substrate when the disc is set on the disc table 204. If the centring member 205 protrudes in this manner beyond the major surface of the disc substrate opposite to the disc table setting major surface when the disc is held by the recording and/or reproducing apparatus, the disc rotating unit inclusive of the disc table is increased in height, so that the recording and/or reproducing apparatus is correspondingly increased in size.

On the other hand, when the recording disc is housed in a thin casing-like disc cartridge, there is a risk of the centring member 205 abutting against the inner surface of a cartridge body of the disc cartridge when the recording disc is loaded onto the disc table 204. In order for the centring member 205 not to protrude beyond the major surface of the disc substrate 201 opposite to the disc table setting major surface and thereby avoid contact of the centring member with the inner surface of the cartridge body, the cartridge body needs to be increased in size, thus leading to an increased size of the disc cartridge.

Patent Specification FR-A-1 550 598 on which the preamble of claim 1 is based discloses a disc with a central projection on the underside defining a positioning reference plane to abut a drive turntable, the disc encapsulating a ferromagnetic member for clamping to the turntable and an aperture extending through the disc and ferromagnetic member to receive a locating pin.

Patent Specification DE-A-26 43 464 discloses a recording disc with a positioning reference plane at a central region of the underside with an upright portion connecting that plane to the underside and a central aperture.

JP-A-63129578 and the English abstract thereof disclosed a disc chucking device for a recording disc including disc setting means and a centring member on the disc setting means with a magnet to attract a ferromagnetic member in a disc to be chucked.

According to the invention there is provided a recording disc comprising a disc substrate formed of a material exhibiting light-transmitting properties having two major surfaces and carrying a signal recording section on at least one of the major surfaces thereof, an annular rib provided at a central portion of one of the major surfaces of the disc substrate on which a recording/reproducing light beam can be incident, the rib having a centre on the same axis as a centre hole traversing the disc substrate from one of the major surfaces to the other of the major surfaces thereof, and a magnetic member (2);
characterised in that said magnetic member is provided on a surface of the disc substrate opposite to the surface on which the recording/reproducing light beam is incident at a position of the disc substrate in register with the annular rib, the magnetic member closing the centre hole.

There is also provided a disk chucking device according to claim 5.

The disc chucking device, for chucking such a recording disc has a positioning reference plane on said annular rib, and preferably comprises:
disc setting means including a disc setting portion and mounted on disc rotating means;
a centring member reciprocably mounted on the disc setting means to abut against an inner surface of the reference plane of the recording disc to centre the recording disc; and
a magnet mounted at the foremost part of the disc setting means inwardly of the centring member.

Such a recording disc may be loaded reliably and satisfactorily onto a disc table without increasing the size of the recording and/or reproducing apparatus and without increasing the size of the disc cartridge when the disc is used in conjunction with the disc cartridge.

Such a chucking device can ensure correct centring of the recording disc.

The invention is diagrammatically illustrated by way of example in the accompanying drawings, in which:
Figure 1 is a longitudinal cross-sectional view showing a recording disc and a chucking device for holding the disc of a previously proposed kind;
Figure 2 shows a part of Figure 1 to a larger scale;
Figure 3 is a perspective view showing one embodiment of a recording disc according to the invention, with a portion thereof broken away;
Figure 4 is a longitudinal cross-sectional view showing a portion of the recording disc shown in Figure 3 and a disc chucking device for holding the disc;
Figure 5 is a perspective view showing a second embodiment of a recording disc according to the invention, with a portion thereof broken away;
Figure 6 is a longitudinal cross-sectional view showing a disc cartridge having the disc of Figure 3 housed therein, with the disc cartridge being shown in a state in which it is being held by the associated disc chucking device;
Figure 7 is a longitudinal cross-sectional view showing the disc cartridge of Figure 6 in a state in which it is completely held by the associated disc chucking device;
Figure 8 is a longitudinal cross-sectional view showing a third embodiment of a recording disc according to the invention, with a portion thereof broken away; and
Figure 9 is a longitudinal cross-sectional view showing a modification of the third embodiment.

The embodiments to be described illustrate arrangements in which a magneto-optical disc is housed in a disc cartridge.

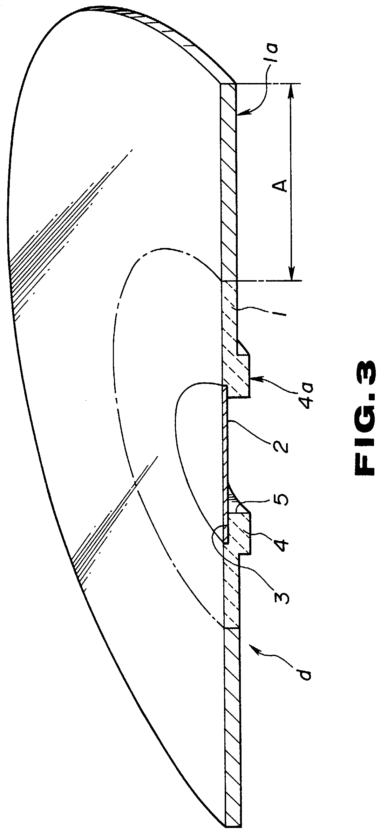

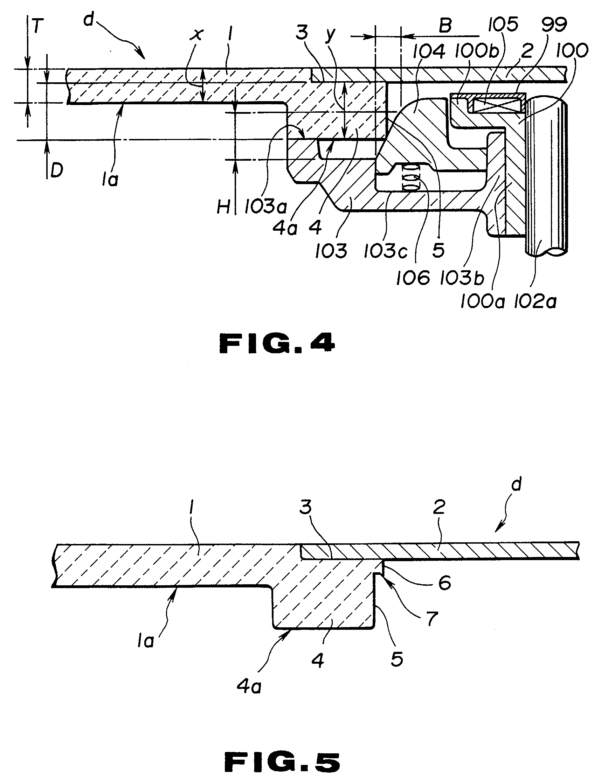

Figures 3 and 4 show a first embodiment of a recording disc d which includes a disc substrate 1 which is formed of light-transmitting synthetic resin, such as polyarbonate, in the form of a disc. One of the major surfaces of the disc substrate 1 is designed as a signal recording surface 1a (ie a surface onto which a laser beam is incident) on or from which information signals are written or read by a recording and/or reproducing apparatus. On the other major surface of the disc substrate 1, there is deposited a recording layer of a magnetic material, such as by vapour deposition or sputtering, in the form of a thin film. When reading information signals from the recording layer, a light beam emitted from an optical head of disc recording and/or reproducing apparatus is irradiated through the disc substrate 1 on the recording layer and the light reflected from the recording layer is received by a photodetector of the optical head for reproducing information signals recorded on the recording disc d. When recording the information signals on the disc d, since the recording disc d is a magneto-optical disc, the light beam is irradiated by the optical head through the disc substrate 1, at the same time that a magnetic field modulated in accordance with the information signals to be recorded is supplied by an external magnetic field generator of the disc recording and/or reproducing apparatus.

Meanwhile, a region of a predetermined width of the recording layer towards the outer rim of the disc substrate 1, as shown by arrow A in Figure 3, is a signal recording region. The disc substrate 1 has a constant thickness of about 1.2mm, as shown by an arrow T in Figure 4.

The disc substrate 1 is formed with a centre hole 5 so that the disc substrate 1 can be held by the disc recording and/or reproducing apparatus. A disc-shaped member 2 is mounted within the centre hole 5. The centre hole 5 is a circular through-hole having its centre in register with the centre of curvature of spiral or concentric recording track(s) formed on the recording layer. The disc-shaped member 2 is formed of metal or like magnetic material and is somewhat larger in diameter than the centre hole 5. The disc-shaped member 2 is mounted on the major surface of the disc substrate 1 bearing the recording layer so as to close the centre hole 5 so that the centre of the member 2 is substantially in register with the centre of the centre hole 5. The disc-shaped member 2 has a constant thickness of about 0.2mm in the present embodiment.

The major surface of the disc substrate 1 bearing the recording layer is formed with a circular recess 3 extending around the rim of the centre hole 5 to receive the disc-shaped member 2. The recess 3 has a diameter and a depth corresponding to the diameter and the thickness of the disc-shaped member, respectively. Thus the disc-shaped member 2 has its upper major surface, that is its major surface opposite to its major surface abutted by the disc substrate 1, substantially flush with the major surface of the disc substrate 1 bearing the recording layer.

The major surface of the disc substrate 1 not bearing the recording layer is formed with an annular rib 4 having a flat end face 4a extending around the centre hole 3. The rib 4 is formed integral with the disc substrate 1. The rib 4 has an inside diameter substantially equal to the diameter of the centre hole 5 and is substantially coaxial with the centre hole 5. The rib 4 has a depth projecting below the major surface of the disc substrate 1 of about 1.2mm.

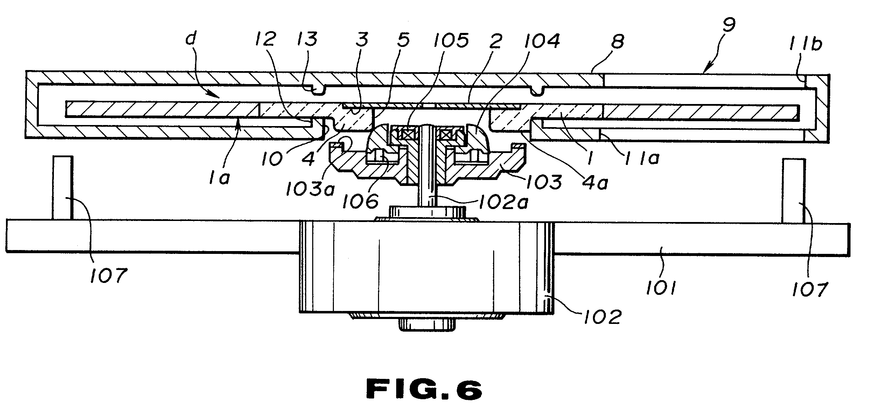

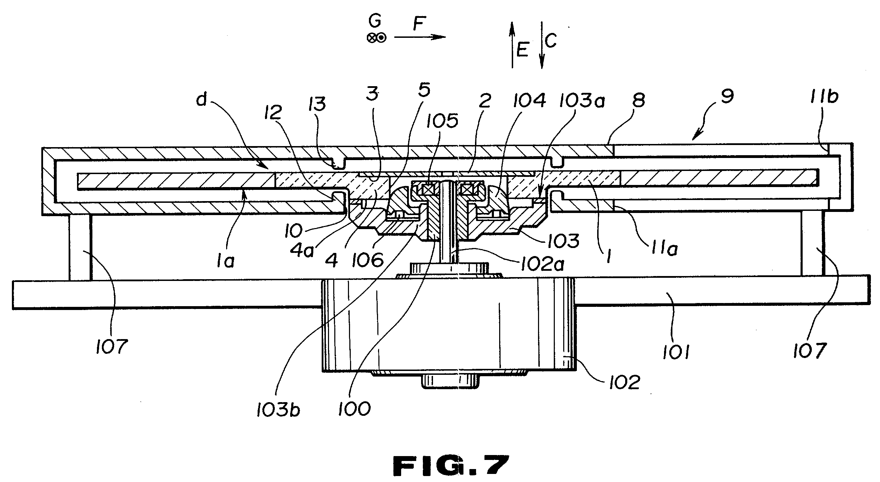

Referring also to Figures 6 and 7, the recording disc d is accommodated in a cartridge body 8 of a disc cartridge 9. The cartridge body 8 is in the form of a thin casing for accommodating the recording disc d therein and has a thickness larger than the thickness of the disc substrate 1 and a plan shape substantially in the form of a square having each side slightly longer than the diameter of the disc substrate 1. The lower major surface of the cartridge body 8 has a central chucking aperture 10. The aperture 10 is circular to permit the rib 4 and the centre hole 5 to be exposed to outside. The upper and lower major surfaces of the cartridge body 8 are formed with recording/reproducing apertures 11b, 11a respectively. The apertures 11a, 11b are formed as substantially square through-holes and extend from the vicinity of the chucking aperture 10 to the vicinity of a lateral side of the cartridge body 8 to permit the signal recording surface 1a of the disc 1 to be exposed to outside between the inner and outer peripheries of the disc d. A light beam from an optical head is irradiated on the recording disc d via the recording/reproducing aperture 11a in the lower major surface of the cartridge body 8, at the same time that an external magnetic field is supplied from an external magnetic field generator via the recording aperture 11b formed in the upper major surface of the cartridge body 8.

The lower inner side and the upper inner side of the cartridge body 8 are formed with ribs 12 and 13, respectively. The rib 12 is formed integral with the inner surface of the cartridge body 8 and faces the major surface of the disc substrate 1 not bearing the recording layer, whilst the rib 13 is formed integral with the inner surface of the cartridge body 8 and faces the major surface of the disc substrate bearing the recording layer. The ribs 12, 13 abut the outer surfaces of the disc 2 and the rib 4 to prevent the major surfaces of the disc from contacting the inner lateral surfaces of the cartridge body 8.

When in use, the recording disc is set on a disc table 103 mounted on the free end of a rotating shaft 201a of a spindle motor 102 of disc recording/reproducing apparatus. The spindle motor 102 is secured to a chassis 101 of the disc recording and/or reproducing apparatus.

The disc table 103 is of a diameter larger than the diameter of the centre hold 5 of the recording disc d and approximately equal to the outside diameter of the rib 4 of the recording disc d. The disc table 103 is mounted on the rotating shaft 102 of the spindle motor 102 by a mounting member 100 which mounts a magnet 105 which attracts the disc-shaped member 2, so that the plane formed by a setting portion 103a of the disc table 103 is normal to the rotating shaft 102a. The disc table is rotated in unison with the rotating shaft 102a when the shaft 102a is rotated. The disc table 103 is made up of a cylindrical portion 103b directed to the inner periphery of the disc table 103 for attachment to the mounting member 100, the setting portion 103a which is directed to the outer periphery of the disc table 103 and provides a flat circular setting surface and a recessed connecting portion 103c interconnecting the inner and outer portions 103a and 103b. The setting portion 103a, the cylindrical portion 103b and the connecting portion 103c of the disc table 103 are formed integrally from synthetic resin or a metallic material.

On the disc table 103, a centring member 104 to centre a recording disc d set on the setting portion 103a is mounted coaxially with respect to the rotating shaft 102a, the mounting member 100 and the disc table 103. The centre member 104 is biased at all times in a direction towards the free end of the rotating shaft 102a, as shown by arrow E in Figure 7, by a compression coil spring 106 arranged between the connection portion 103c of the disc table 103 and the centring member 104.

The centring member 104 is substantially in the shape of a frustum of a cone with an upper side thereof towards the free end of the rotating shaft 102a smaller in diameter than the lower bottom side thereof facing the connection portion 103c of the disc table 103. The centring member 104 is mounted coaxially with respect to the disc table 103 to perform a sliding reciprocation with respect to the cylindrical portion 103b of the disc table 103. The upper and lower limit amounts of displacement of the centring member 104 are determined by a magnet mounting portion 100b at the upper end of the magnet mounting member 100 and by the length of the compression spring 106 disposed within the connecting portion 103c of the disc table 103. The centring member 104 is slidable between these upper and lower limit positions depending on the setting operation of the disc table 103.

The mounting member 100 comprises a tubular portion 100a fitted to the rotating shaft 102a of the spindle motor 102 and the flanged magnet mounting portion 100b on one end of the tubular portion 100a, the portions 100a and 100b being formed from metal or like material integral with each other. The outer periphery of the magnet mounting portion 100b is formed with an upright wall portion to form a mounting recess for mounting the magnet 105 which is an annular magnet.

The upper surface of the magnet 105, placed within the recess of the magnet mounting portion 100b, is covered with a cover member 99.

When the disc cartridge 9 is loaded in position on the chassis 101 within the disc recording and/or reproducing apparatus, as shown in Figure 6, the lower rim of the centre hole 5 of the recording disc d, that is the inner edge of the rib 4, abuts the outer peripheral surface of the centring member 105. When the cartridge body 8 is moved further towards the chassis 101, that is in the descending direction, the cartridge body 8 abuts against the end of upright positioning pins 107, provided on the chassis 101, as shown in Figure 7, so that the cartridge body 8 is positioned correctly on the chassis 101 for recording and/or reproduction of the recording disc d upon rotation by the spindle motor.

Since the disc-shaped member 2 of the recording disc d is attracted by the magnet 105 arranged on the disc table 103, the centring member 104 is moved towards the near end of the rotating shaft 102a, against the bias of the compression coil spring 106. Thus the disc d is set on the disc table 103 with the flat end face 4a of the rib 4 set on the setting portion 103a.

That is, the flat end face 4a of the rib 4 functions as a reference plane when setting the recording disc d on the disc table 103. The position along the height of the recording disc d with respect to the disc table 103 is set with the flat end face 4a as the reference.

The outer peripheral surface of the centring member 104 abuts against the inner periphery of the centre hold 5 under the bias of the compression coil spring 106. Simultaneously, under the force of attraction exerted by the magnet 105 on the disc-shaped member 2 of the recording disc d, the centring member 104 causes the disc substrate 1 to be displaced relative to the disc table 103 in mutually perpendicular directions shown by arrows F and G in Figure 7 parallel to the major surfaces of the disc substrate 1. By this displacement of the disc substrate 1, the centring operation of bringing the centre of the centre hole 5 into coincidence with the axis of the centring member 104 is achieved.

In this manner, the disc substrate 1 is loaded by the setting portion 103a of the disc table 103 and the centring member 104 at a predetermined reference position accorded by the disc table 103.

The recording disc d thus loaded in the disc recording and/or reproducing apparatus may be rotated in unison with the disc table 103 which is rotationally driven by the spindle motor 102.

Information signals may be recorded on or reproduced from the recording layer by an optical head, not shown, of the disc recording and/or reproducing apparatus.

The optical head is disposed to face the signal recording surface 1a and is moved across the inner and outer peripheries of the signal recording surface 1a in register with at least the signal recording region of the disc. The optical head is provided with an objective lens by means of which the light flux is irradiated on the recording layer through the disc substrate 1 for writing and/or reading information signals on or from the recording layer.

Since a magneto-optical disc is used as the recording disc d in the present embodiment, an external magnetic field generator for generating a magnetic field modulated in accordance with information signals is arranged on the opposite side of the recording disc with respect to the optical head to record information signals on the recording disc d. The modulated magnetic field is supplied by the external magnetic field supplying device to the recording layer heated by the light beam radiated by the optical head to record information signals on the disc d.

With the present recording disc d, the centre hole 5 is defined by the rib 4, the depth of the centre hole 5 from the major surface of the disc substrate 1 provided with the recording layer, as indicated by arrow D in Figure 4, is deeper than the thickness of the disc substrate 1 by an amount corresponding to the height of the rib 4, such as by 2.2mm. Thus, with the present recording disc d, the height of the centring member 104 along the axis of the rotating shaft 102a may be increased as compared with that for a conventional recording disc not provided with the rib 4, without increasing the size of the recording and/or reproducing apparatus, while the centring operation of the recording disc d may be facilitated.

That is, with the disc recording and/or reproducing apparatus, in order that a centring operation may be achieved at the time of setting the disc d on the disc table 103 despite a larger offset of the recording disc d with respect to the centring member 104, the width of the outer peripheral surface of the centring member 104 along the major surfaces of the disc substrate 1, as indicated by arrow B in Figure 4, needs to be increased to, for example, 0.8mm. At this time, with the disc recording and/or reproducing apparatus, in which the recording disc d is used, the height of the centring member 104 along the axis of the rotating shaft 102a, as indicated by arrow H in Figure 4, may be about 1.0mm. Consequently, with the described disc recording and/or reproducing apparatus, the outer peripheral surface of the centring member 104 may be sloped steeply relative to the major surfaces of the disc substrate 1 so that the inner peripheral surface of the centre hole 5 may be slid more smoothly relative to the outer peripheral surface of the centre member 104 to ensure smooth centring of the recording disc d.

With the described recording disc d, since the disc substrate 1 is provided with the rib 4, the gap between the rim of the chucking aperture 10 and the disc substrate 1 is stopped by the rib 4 when the recording disc is accommodated in the cartridge body 8 to prevent dust and dirt from intruding into the interior of the disc cartridge 9.

A recording disc d according to a second embodiment of the present invention is shown in Figure 5 and has a burr 7 produced during machining of the centre hole 5 in the disc substrate 1 at a position removed from the flat end portion 4a of the rib 4. That is, when forming the recording disc d, the annular rib 4 is formed at the centre of the disc substrate 1 integral with the disc substrate 1, such as by injection moulding, and a circular through-hole 6 constituting the centre hole 5 is bored on the inner surface of the rib 4. If the diameter of the through-hole 6 is selected to be slightly smaller than the inside diameter of the rib 4, the burr 7 is produced within the centre hole 5 at a position removed from the flat end portion 4a of the rib 4. If the recording disc d is arranged in this manner, the shape of the flat end portion 4a of the rib 4 is not affected by the burr 7, so that an optimum centring operation may be performed by the centring member 104.

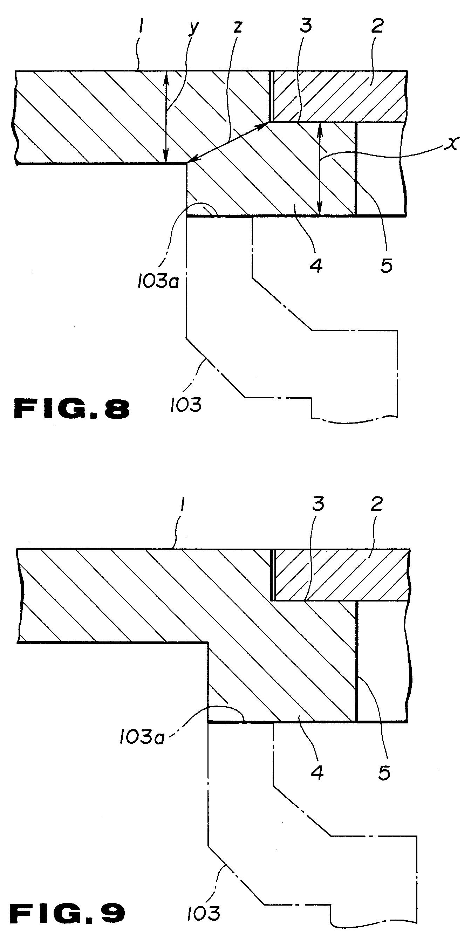

Figure 8 shows a third embodiment and parts or components which are the same as those shown in the preceding embodiments are indicated by the same reference numerals and detailed description therefor is omitted for simplicity.

The rib 4 is formed integrally at a central portion of one of the major surfaces of a disc substrate 1, such as from a synthetic resin. In this manner, the thickness of a portion around the centre hole 5 may be larger than that of the main portion of the disc substrate 1 provided with the signal recording surface 1a. Referring to Figure 8, by setting the thickness x of a portion between the bottom of a recess 3 and the lower end face of the rib 4 in the portion of the disc substrate 1 provided with the rib 4 so as to be substantially equal to the thickness y of the signal recording region A of the disc substrate 1, it becomes possible to prevent so-called sink which is deformation of an upper surface of a moulded product due to shrinkage produced when forming the disc substrate from synthetic resin. Above all, with the recording disc d in which the end portion 4a of the rib 4 is flattened so as to be used as a positioning surface, as shown in Figure 8, flow of molten resin in a metal mould used for injection moulding is smoothed to prevent sink from being produced at the rib 4.

The thickness z of a transition region between the thicknesses x and y is preferably substantially equal to the thicknesses x and y as shown in Figure 8.

If the disc substrate 1 is moulded using a moulding material less subject to sink, the amount of protuberance of the rib 4 may be increased to increase the wall thickness of the region around the centre hole 5 further as shown in Figure 9.

If the end portion 4a of the rib 4 cannot be flattened sufficiently, a positioning surface may be provided in a perimetral region of the disc substrate 1 around the rib 4.

A recording disc according to the invention need not be a magneto-optical disc, it could be, for example, a read-only optical disc in which information signals are pre-recorded in the form of embossed pits or a write-once type optical disc in which information signals can be recorded only once.

## Claims

1. A recording disc (d) comprising a disc substrate (1) formed of a material exhibiting light-transmitting properties having two major surfaces and carrying a signal recording section (A) on at least one of the major surfaces thereof, an annular rib (4) provided at a central portion of one of the major surfaces (1a) of the disc substrate (1) on which a recording/reproducing light beam can be incident, the rib (4) having a centre on the same axis as a centre hole (5) traversing the disc substrate (1) from one of the major surfaces to the other of the major surfaces thereof, and a magnetic member (2);
characterised in that said magnetic member (2) is provided on a surface of the disc substrate (1) opposite to the surface (1a) on which the recording/reproducing light beam is incident at a position of the disc substrate (1) in register with the annular rib (4), the magnetic member (2) closing the centre hole (5).

2. A recording disc according to claim 1, wherein a recess (3) receiving the magnetic member (2) is provided on a surface of the disc substrate opposite to the surface (1a) on which the recording/reproducing light beam is incident at a position of the disc substrate (1) in register with the annular rib (4).

3. A recording disc according to claim 1, wherein a region of the disc substrate (1) provided with the signal recording section (A) has a thickness (y) substantially equal to that (x) of a region of the disc substrate (1) provided with the rib (4).

4. A recording disc according to claim 1, wherein a region connecting the region of the disc substrate (1) provided with the signal recording section (A) to the region of the disc substrate (1) provided with the rib has a thickness (z) substantially equal to that (y) of the region of the disc substrate provided with the signal recording section.

5. A disc chucking device for chucking a recording disc (d) according to any one of claims 1 to 4 and having a positioning reference plane (4a) on said annular rib (4), the disc chucking device comprising:
disc setting means (103) including a disc setting portion (103a) and mounted on disc rotating means (102a);
a centring member (104) reciprocably mounted on the disc setting means (103) to abut against an inner surface of the reference plane (4a) of the recording disc (d) to centre the recording disc (d); and
a magnet (105) mounted at the foremost part of the disc setting means inwardly of the centring member (104).

6. A disc chucking device according to claim 5, wherein the magnet (105) is disposed in the reference plane (4a) of the recording disc (d) when the disc (d) is set on the setting portion (103a) and centred by the centring member (103a).

7. A disc chucking device according to claim 5, wherein the magnet (105) is arranged inwardly of the rib (4) of the recording disc (d) to face the magnetic member (2) of the recording disc when the disc (d) is set on the setting portion (103a) and centred by the centring member (104).

8. A disc chucking device according to claim 5, wherein the setting portion (103a) can support the reference plane (4a) of the recording disc (d).

## Patentansprüche

1. Aufzeichnungsplatte (d) mit
einem Plattensubstrat (1), welches aus einem Material gebildet ist, welches Lichtdurchlaßeigenschaften zeigt, das zwei Hauptflächen hat und einen Signalaufzeichnungsabschnitt (A) auf zumindest einer seiner Hauptflächen trägt,
einer ringförmigen Rippe (4), die an einem Zentralbereich einer der Hauptflächen (1a) des Plattensubstrats (1) vorgesehen ist, auf welcher ein Aufzeichnungs/Wiedergabe-Lichtstrahl auftreffen kann, wobei die Rippe (4) ein Zentrum auf der gleichen Achse wie ein Zentralloch (5) hat, welches das Plattensubstrat (1) von einer der Hauptflächen zur anderen der Hauptflächen durchquert, und
einem Magnetteil (2);
**dadurch gekennzeichnet, daß**
das Magnetteil (2) auf einer Fläche des Plattensubstrats (1) gegenüber der Fläche (1a), auf welcher der Aufzeichnungs/Wiedergabe-Lichtstrahl auftrifft, an einer Position des Plattensubstrats (1) vorgesehen ist, die mit der ringförmigen Rippe (4) fluchtet, wobei das Magnetteil (2) das Zentralloch (5) verschließt.

2. Aufzeichnungsplatte nach Anspruch 1, wobei eine Ausnehmung (3), die das Magnetteil (2) aufnimmt, auf einer Fläche des Plattensubstrats gegenüber der Fläche (1a), auf welcher der Aufzeichnungs/Wiedergabe-Lichtstrahl auftrifft, an einer Position des Plattensubstrats (1) vorgesehen ist, die mit der ringförmigen Rippe (4) fluchtet.

3. Aufzeichnungsplatte nach Anspruch 1, wobei ein Bereich des Plattensubstrats (1), der mit dem Signalaufzeichnungsabschnitt (A) versehen ist, eine Dicke (y) hat, die in etwa gleich der (x) eines Bereichs des Plattensubstrats (1) ist, der mit der Rippe (4) versehen ist.

4. Aufzeichnungsplatte nach Anspruch 1, wobei ein Bereich, der den Bereich des Plattensubstrats (1), der mit dem Signalaufzeichnungsabschnitt (A) versehen ist, mit dem Bereich des Plattensubstrats (1) verbindet, der mit der Rippe versehen ist, eine Dicke (z) hat, die in etwa gleich der (y) des Bereichs des Plattensubstrats ist, der mit dem Signalaufzeichnungsabschnitt versehen ist.

5. Plattenaufspanneinrichtung zum Aufspannen einer Aufzeichnungsplatte (d) nach einem der Ansprüche 1 bis 4, die eine Positionierungs-Referenzebene (4a) auf der ringförmigen Rippe (4) hat, wobei die Plattenaufspanneinrichtung aufweist:
eine Plattenfixiereinrichtung (103), die ein Plattenfixierteil (103a) umfaßt und das auf der Plattendreheinrichtung (102a) befestigt ist;
ein Zentrierteil (104), welches auf der Plattenfixiereinrichtung (103) hin- und herbewegbar befestigt ist, damit es an eine Innenfläche der Referenzebene (4a) der Aufzeichnungspiatte (d) anstößt, um die Aufzeichnungsplatte (d) zu zentrieren; und
einen Magnet (105), der auf dem vordersten Teil der Plattenfixiereinrichtung im Innern des Zentrierteils (104) befestigt ist.

6. Plattenaufspanneinrichtung nach Anspruch 5, wobei der Magnet (105) in der Referenzebene (4a) der Aufzeichnungsplatte (d) angeordnet ist, wenn die Platte (d) auf dem Fixierteil (103a) fixiert und durch das Zentralteil (103a) zentriert ist.

7. Plattenaufspanneinrichtung nach Anspruch 5, wobei der Magnet (105) im Innern der Rippe (4) der Aufzeichnungsplatte (d) angeordnet ist, so daß er dem Magnetteil (2) der Aufzeichnungsplatte zugewandt ist, wenn die Platte (d) auf dem Fixierteil (103a) fixiert und durch das Zentrierteil (104) zentriert ist.

8. Plattenaufspanneinrichtung nach Anspruch 5, wobei das Fixierteil (103a) die Referenzebene (4a) der Aufzeichnungsplatte (d) lagern kann.

## Revendications

1. Disque d'enregistrement (d) comprenant un support de disque (1) formé d'un matériau présentant des propriétés de transmission de la lumière possédant deux surfaces principales et portant une section d'enregistrement de signal (A) sur au moins une de ses surfaces principales, une nervure annulaire (4) prévue sur une partie centrale de l'une des surfaces principales (1a) du support de disque (1) sur laquelle un faisceau de lumière d'enregistrement/lecture peut être incident, la nervure (4) possédant un centre sur le même axe qu'un trou central (5) traversant le support de disque (1) à partir d'une des surfaces principales vers l'autre de ses surfaces principales, et une pièce magnétique (L);
disque caractérisé en ce que ladite pièce magnétique (2) est prévue sur une surface du support de disque (1) opposée à la surface (1a) sur laquelle le faisceau de lumière d'enregistrement/lecture est incident sur une position du support de disque (1) en alignement avec la nervure annulaire (4), la pièce magnétique (2) fermant le trou central (5).

2. Disque d'enregistrement selon la revendication 1, dans lequel un creux (3) recevant la pièce magnétique (2) est prévu sur une surface du support de disque opposée à la surface (1a) sur laquelle le faisceau de lumière d'enregistrement/lecture est incident sur une position du support de disque (1) alignée avec la nervure annulaire (4).

3. Disque d'enregistrement selon la revendication 1, dans lequel une zone du support de disque (1) munie de la. section d'enregistrement de signal (A) possède une épaisseur (y) pratiquement égale à celle (x) d'une zone du support de disque (1) munie de la nervure (4).

4. Disque d'enregistrement selon la revendication 1, dans lequel une zone raccordant la zone du support de disque (1) munie de la section d'enregistrement de signal (A) à la zone du support de disque (1) munie de la nervure possède une épaisseur (z) pratiquement égale à celle (y) de la zone du support de disque munie de la section d'enregistrement de signal.

5. Dispositif de blocage de disque pour le blocage d'un disque d'enregistrement (d) selon l'une quelconque des revendications 1 à 4, et possédant un plan de référence de positionnement (4a) sur ladite nervure annulaire (4), dispositif de blocage de disque comprenant :
- un moyen de placement de disque (103) comprenant une partie de placement de disque (103a) et monté sur un moyen de mise en rotation de disque (102a);
- une pièce de centrage (104) montée, pour un déplacement alterné, sur le moyen de placement de disque (103) pour buter contre une surface interne du plan de référence (4a) du disque d'enregistrement (d) pour centrer le disque d'enregistrement (d); et
- un aimant (105) monté sur la partie la plus en avant du moyen de placement de disque vers l'intérieur de la pièce de centrage (104).

6. Dispositif de blocage de disque selon la revendication 5, dans lequel l'aimant (105) est placé dans le plan de référence (4a) du disque d'enregistrement (d) lorsque le disque (d) est placé sur la partie de placement (103a) et est centré par la pièce de centrage (103a).

7. Dispositif de blocage de disque selon la revendication 5, dans lequel l'aimant (105) est agencé vers l'intérieur de la nervure (4) du disque d'enregistrement (d) pour faire face à la pièce magnétique (2) du disque d'enregistrement lorsque le disque (d) est placé sur la partie de placement (103a) et est centré par la pièce de centrage (104).

8. Dispositif de blocage de disque selon la revendication 5, dans lequel la partie de placement (103a) peut supporter le plan de référence (4a) du disque d'enregistrement (d).
